# EUROPÄISCHE PATENTANMELDUNG

(11) **EP 1 036 724 A1**
(43) Veröffentlichungstag der Anmeldung: **20.09.2000**
(21) Anmeldenummer: 00105671.2
(22) Anmeldetag: 17.03.2000
(51) Int. Cl.: B62B 7/12

(54) **Kinderwagen**

(30) Priorität: 17.03.1999 DE 29904867 U
(71) Anmelder: Rohde, Sabine-Nicole, 40489 Düsseldorf (DE)
(72) Erfinder: Rohde, Sabine-Nicole, 40489 Düsseldorf (DE)
(74) Vertreter: Stenger, Watzke & Ring Patentanwälte

(57) **Zusammenfassung**

Die Erfindung betrifft einen Kinderwagen mit einem wenigstens ein Kind in liegender oder sitzender Position aufnehmenden Korpus sowie einem den Korpus tragenden Gestell. Um einen Kinderwagen bereitzustellen, der eine eigentümliche äußere Erscheinungsform aufweist, die zudem mannigfaltige Gestaltungsmöglichkeiten bietet, wird mit der Erfindung vorgeschlagen, daß der Korpus aus einem Basiselement und einem Formelement gebildet ist, wobei unterschiedliche Formelemente nach dem Baukastenprinzip auswechselbar mit einem Basiselement kombinierbar sind und zumindest das Formelement eine einem Fahrzeug nachempfundene Formgestaltung aufweist.

## Beschreibung

Die Erfindung betrifft einen Kinderwagen mit einem wenigstens ein Kind in liegender oder in sitzender Position aufnehmenden Korpus sowie einem den Korpus tragenden Gestell.

Aus dem Stand der Technik sind eine Vielzahl unterschiedlicher Kinderwagen bekannt. Sie dienen dem Transport von Säuglingen und Kindern und gewährleisten vor allem einen sicheren Transport. Je nach Alter des zu transportierenden Kindes ist die Verwendung verschiedenartiger Kinderwagen bekannt, so daß die Möglichkeit gegeben ist, Kinder sowohl in liegender als auch in sitzender Position zu transportieren.

Die aus dem Stand der Technik bekannten Kinderwagen bestehen im wesentlichen aus einem Korpus, der der Aufnahme des Kindes dient sowie einem Gestell, das als Fahrgestell mit Rädern versehen ist und den Korpus trägt. Für eine einfache Handhabung ist zumeist eine Handhabe am Korpus oder am Gestell des Kinderwagens angeordnet. Aufgrund dieses funktionsbezogenen Aufbaus ergibt sich bei den aus dem Stand der Technik bekannten Kinderwagen ein sich ähnelndes Erscheinungsbild, so daß ein großer Bedarf an neuen, andersartigen Erscheinungsformen besteht. Insbesondere unter dem Aspekt, daß es sich bei einem Kinderwagen um einen Massenartikel handelt, kommt dem Erscheinungsbild eine besondere Gewichtung zu.

Ausgehend von diesem Stand der Technik liegt der Erfindung die **Aufgabe** zugrunde, einen Kinderwagen bereitzustellen, der eine eigentümliche äußere Erscheinungsform aufweist, die zudem mannigfaltige Gestaltungsmöglichkeiten bietet.

Zu technischen **Lösung** dieser Aufgabe wird mit der Erfindung vorgeschlagen, daß der Korpus aus einem Basiselement und einem Formelement gebildet ist, wobei unterschiedliche Formelemente nach dem Baukastenprinzip auswechselbar mit einem Basiselement kombinierbar sind und zumindest das Formelement eine einem Fahrzeug nachempfundene Formgestaltung aufweist.

Mit dem erfindungsgemäßen Kinderwagen wird so die Möglichkeit gegeben, unterschiedlich ausgestaltete und eine eigentümliche Erscheinungsform aufweisende Formelemente mit ein und demselben Basiselement zu kombinieren, womit auf Kundenwünsche zugeschnittene und individuelle Anforderungen berücksichtigende Gestaltungsmöglichkeiten der äußeren Erscheinungsform eröffnet werden. Je nach Gestaltungswunsch des Kunden können so die Einzelteile produziert und werksseitig zu einem individuellen Kinderwagen montiert werden. Hierzu weist zumindest das Formelement eine einem Fahrzeug nachempfundene Formgestaltung auf. So lassen sich zur Formgestaltung des Kinderwagens beispielsweise solche Formelemente verwenden, die dem äußeren Erscheinungsbild eines Sportwagens nachempfunden sind. Neben einer solchen Gestaltungsmöglichkeit lassen sich natürlich auch solche Formelemente verwenden, die beispielsweise der Form eines Hubschraubers oder der eines Schiffes nachempfunden sind. Gemäß einer alternativen Ausgestaltung der Erfindung sind das Formelement und das Basiselement derart ausgestaltet, daß sie nicht nur werksseitig miteinander zu einem Korpus kombiniert werden können, sondern daß auch der Kunde selbst je nach gewünschter Erscheinungsform unterschiedliche Formelemente verwenden und diese austauschbar mit dem Basiselement kombinieren kann.

Gemäß einem Merkmal der Erfindung ist das Formelement im Sinne einer Verkleidung am Basiselement und/oder am Gestell lösbar angeordnet. Mit Vorteil wird hierdurch die Möglichkeit geschaffen, Formelement wahlweise gegeneinander auszutauschen. Gemäß einer ersten Alternative können dabei Form- und Basiselement dergestalt aneinander angeordnet sein, daß ein Austausch des Formelementes gegen ein anderes nur werksseitig erfolgen kann. Gemäß einer zweiten Alternative kann allerdings auch eine solche Verbindung von Form- und Basiselement erfolgen, die es dem Kunden selbst erlaubt, verschiedenartige Formelemente mit einem Basiselement auswechselbar zu kombinieren und je nach Geschmack ein Formelement gegen ein anderes auszutauschen.

Gemäß einem weiteren Merkmal der Erfindung ist das Gestell in seiner Formgestaltung dem Chassis eines Kraftfahrzeuges nachempfunden. Bei der Kombination eines solchen Gestells mit einem der Form eines Kraftfahrzeuges nachempfundenen Formelement ergibt sich somit ein Kinderwagen in Form einer Kraftfahrzeugnachbildung. Hierdurch wird in vorteilhafter Weise eine Formgestaltung erzielt, die sich von den aus dem Stand der Technik bekannten Kinderwagen absetzt.

Gemäß einem weiteren Merkmal der Erfindung sind das Gestell und das Basiselement lösbar miteinander verbindbar. Somit lassen sich Gestell und Basiselement voneinander trennen, was insbesondere dann von Vorteil ist, wenn der an sich sperrige Kinderwagen beispielsweise im Kofferraum eines Autos transportiert werden soll und er zu diesem Zweck im Sinne einer besseren Handhabbarkeit in Korpus und Gestell unterteilbar ist. Ferner wird durch die lösbare Verbindung von Basiselement und Gestell die Möglichkeit eröffnet, den Korpus des Kinderwagens getrennt vom Gestell zu verwenden.

Für eine bessere Handhabung des Kinderwagens ist zudem das Gestell gemäß einem weiteren Merkmal der Erfindung in der Höhe verstellbar. Desweiteren ist eine Handhabe vorgesehen, die lösbar und um einen Winkel verschwenkbar am Korpus oder am Gestell angeordnet ist. Bezogen auf die Körpergröße des Benutzers ist somit sowohl hinsichtlich des Gestells als auch hinsichtlich der Handhabe eine optimierte Einstellung möglich.

Gemäß einem weiteren Merkmal der Erfindung wird zur Formgebung des Kinderwagens vorgeschlagen, daß sämtliche Bauteile des Kinderwagens in ihrer Formgestaltung denen eines Kraftfahrzeuges nachempfunden sind. So kann beispielsweise die Handhabe die Form eines Spoilers aufweisen oder die Räder sind als Kraftfahrzeugräder ausgebildet.

Gemäß einem weiteren Merkmal der Erfindung besteht das Formelement aus Kunststoff, was eine einfache und insbesondere preisgünstige Herstellung ermöglicht. Auch kann das Formelement aus Metall, vorzugsweise Leichtmetall, gebildet sein, wobei insbesondere unter dem Aspekt einer sehr genauen und aufwendigen Nachbildung der Formgestaltung eines Fahrzeuges die Verwendung von Metall als Formelementmaterial von Vorteil ist.

Gemäß einem weiteren Merkmal der Erfindung verfügt der Kinderwagen über eine Bremsanlage bzw. eine Wegfahrsperre. Die Wegfahrsperre kann beispielsweise als wenigstens zwei Räder blockierende Rasteinrichtung ausgebildet sein, die am Gestell des Kinderwagens angeordnet ist und im Sinne einer Fußraste mit dem Fuß bedienbar ist. Eine solche Wegfahrsperre ist insbesondere von Vorteil, wenn der Kinderwagen kurzzeitig abgestellt werden soll und der Benutzer verhindern möchte, daß der Kinderwagen aufgrund von Gefälle, Erschütterungen oder dergleichen unkontrolliert davonrollt. Aus Gründen der Sicherheit ist zudem eine Bremsanlage von Vorteil, die es ermöglicht, nicht nur ein unkontrolliertes Davonrollen des Kinderwagens zu vermeiden, sondern die auch ein Abbremsen des Kinderwagens aus voller Fahrgeschwindigkeit heraus erlaubt. Zu diesem Zweck können mit der Hand bedienbare Betätigungseinrichtungen vorgesehen sein, die in gut zu erreichender Position an der Handhabe des Kinderwagens angeordnet sind.

Gemäß einem weiteren Merkmal der Erfindung weist der Kinderwagen eine Beleuchtungseinrichtung auf. So können beispielsweise Positions- oder Erkennungsleuchten am Kinderwagen angeordnet sein, um so insbesondere bei Dämmerung oder bei Dunkelheit die Wahrnehmung des Kinderwagens durch andere Verkehrsteilnehmer zu erleichtern. Für die Energieversorgung der Beleuchtungseinrichtung kann beispielsweise ein Energiespeicher in Form einer Batterie oder ein von einem der Räder des Kinderwagens anzutreibender Dynamo vorgesehen sein.

Gemäß einem weiteren Merkmal der Erfindung ist zur Abgabe von insbesondere Warnsignalen eine Signaleinrichtung am Kinderwagen angeordnet. Dabei kann die Signaleinrichtung als mechanisch zu betätigende Signalhupe bzw. Klingel oder als elektrischer Signalgeber ausgebildet sein.

Weitere Vorteile und Merkmale der Erfindung ergeben sich aus der Beschreibung anhand der Figuren. Dabei zeigen:
- Fig. 1: perspektivische Darstellung eines Kinderwagens zur Aufnahme eines Kindes in sitzender Position gemäß einer ersten Ausführungsform;
- Fig. 2: perspektivische Darstellung eines Kinderwagens zur Aufnahme eines Kindes in sitzender Position gemäß einer zweiten Ausführungsform;
- Fig. 3: perspektivische Darstellung eines Kinderwagens zur Aufnahme eines Kindes in liegender Position gemäß einer ersten Ausführungsform.

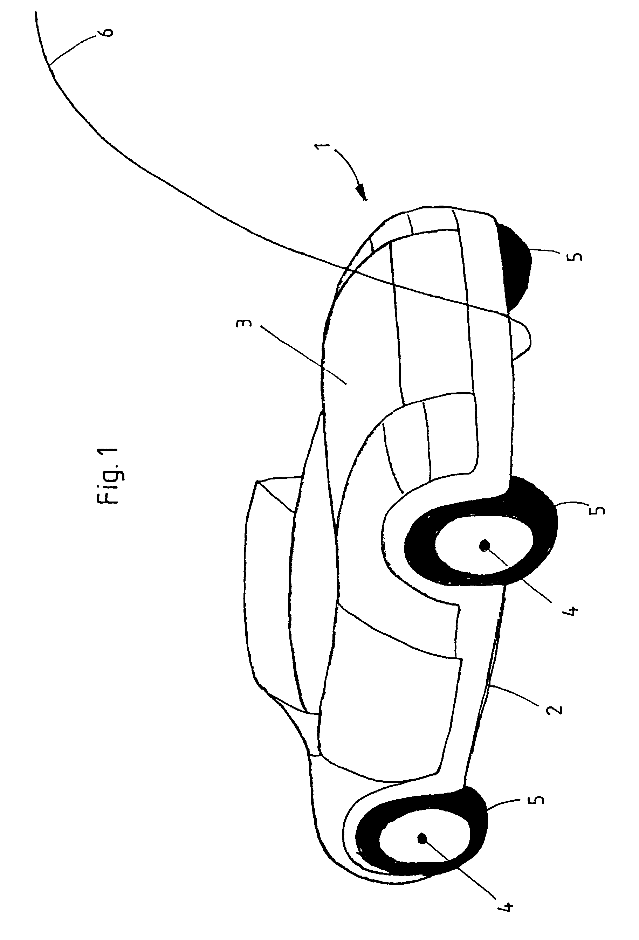

Fig. 1 zeigt einen erfindungsgemäßen Kinderwagen für den Transport eines Kindes in sitzender Position. Der aus Formelement 3 und Basiselement 2 bestehende Korpus 1 ist in seiner Formgestaltung dem eines Sportwagens nachempfunden. Dabei bildet das Formelement 3 im Sinne einer Verkleidung die Karosse, wohingegen das Basiselement 2 als Bodenplatte ausgebildet ist. Bei dem hier dargestellten Ausführungsbeispiel ist das Formelement 3 einstückig aus Kunststoff hergestellt und mittels lösbarer Befestigungsmittel am Basiselement 2 befestigt. Durch einfaches Lösen der Befestigungsmittel lassen sich so unterschiedlich gestaltete Formelemente, die jeweils der Karosse eines anderen Sportwagens nachempfunden sind, auswechselbar mit dem als Bodenplatte ausgebildeten Basiselement 2 kombinieren.

An dem Basiselement 2 ist vorne wie hinten jeweils eine der Breite des Kinderwagens entsprechend ausgebildete Achse angeordnet, die zusammen das Gestell 4 bilden. Jeweils an jedem Ende einer Achse ist ein Rad 5 drehbar gelagert angeordnet. Für eine sichere Handhabung des Kinderwagens ist eine beispielhaft dargestellte Handhabe 6 vorgesehen, die aus einer durchgehenden Stange gebildet ist und mit ihrem einen Ende kinderwagenseitig am Basiselement 2 befestigt ist. Anstelle einer durchgehenden Stange kann die Handhabe 6 auch zweiteilig und in ihrer Länge verstellbar ausgebildet sein. Hinsichtlich der Körpergröße des Benutzers ist somit eine optimierte Einstellung möglich.

Je nach Alter des zu transportierenden Kindes sind zwei alternative Ausgestaltungsmöglichkeiten des Kinderwagens gemäß Fig. 1 denkbar. Gemäß einer ersten Ausgestaltungsform wird das Kind von dem insgesamt eine geschlossene Hülle bildenden Formelement 3 schützend aufgenommen und mittels sich innerhalb des Formelementes 3 befindlicher Gurte festgeschnallt. Allein über die Handhabe 6 obliegt dem Benutzer des Kinderwagens die vollständige Kontrolle über Fahrrichtung und Fahrgeschwindigkeit des Kinderwagens. Zudem kann der Kinderwagen über eine über die Handhabe 6 oder über eine am Gestellt 4 angeordnete Rasteinrichtung zu bedienende Feststellbremse verfügen. Um ein Verletzungsrisiko auszuschließen sind desweiteren schmückende Zusatzteile wie beispielsweise Außenspiegel, Lenkrad oder Heckspoiler bei dieser Ausgestaltungsform nicht vorgesehen. Gemäß einer zweiten Ausführungsform dient der Kinderwagen zusätzlich als Spiel- und Sportgerät für das Kind. Zu diesem Zweck sind im Basiselement 2 Aussparungen vorgesehen, durch die das Kind zum Erhalt von Bodenkontakt seine Beine führen kann, um sich so aus eigener Muskelkraft fortbewegen zu können. Die Handhabe 6 kann bei einer solchen Ausgestaltung weiterhin am Kinderwagen verbleiben und als Korrekturhilfe für Fahrgeschwindigkeit und Fahrrichtung dienen. Auch kann die Handhabe entfernt werden, womit dem Kind ein eigenverantwortliches Steuern ermöglicht wird. Für eine detaillierte Nachbildung der Form eines Sportwagens kann der Kinderwagen zudem über zusätzliche Anbauteile wie beispielsweise Außenspiegel, Lenkrad oder Heckspoiler verfügen.

Zur sicheren Handhabung des Kinderwagens ist desweiteren eine Beleuchtungseinrichtung vorgesehen, die der Formgebung eines Kraftfahrzeuges entsprechend als Front- bzw. Heckleuchten ausgebildet sind. Die Energieversorgung der Beleuchtungseinrichtung kann dabei entweder mittels eines entsprechenden Energiespeichers, beispielsweise eines Akkumulators, oder mittels eines von einem der Räder anzutreibenden Dynamos erfolgen. Zur Betätigung der Beleuchtungseinrichtung sind Ein- und Ausschalter bzw. Helligkeitsregler an der Handhabe des Kinderwagens angeordnet. Insbesondere bei Einsetzen der Dämmerung oder bei Dunkelheit ist die Verwendung einer solchen Beleuchtungseinheit von Vorteil, da der Kinderwagen von anderen Verkehrsteilnehmer, insbesondere von auch den Gehsteig benutzenden Verkehrsteilnehmern, wie beispielsweise Radfahrern oder Rollschuhfahrern, besser wahrgenommen werden kann, was eine sicherere Fortbewegung mit dem Kinderwagen ermöglicht. Desweiteren ist an der Handhabe 6 eine Signaleinrichtung angeordnet, die zur Abgabe von insbesondere Warnsignalen dient und unter deren Zuhilfenahme der Kinderwagenbenutzer auf sich aufmerksam machen kann. Die Signaleinrichtung kann entweder als mechanisch zu bedienende Hupe oder Klingel oder als elektrisch betätigbare Signalgeber ausgebildet sein.

Zur Schaffung zusätzlichen Stauraums, beispielsweise zur Aufnahme von Kinderspielzeug oder von Ersatzwindeln, weist der Kinderwagen einen zusätzlichen Aufnahmebereich im hinteren Teil des Kinderwagens auf, der durch eine verschließbare Klappe abdeckbar ist. Gemäß der Formgestaltung des Kinderwagens ist dieser Stauraum als Kofferraum ausgebildet und mit einer einer Kofferraumklappe nachempfundenen Abdeckplatte verschließbar.

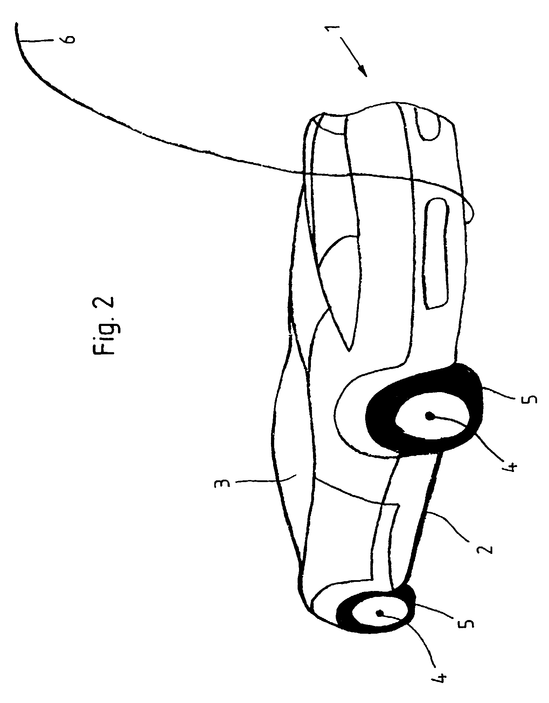

In Fig. 2 ist ebenfalls ein Kinderwagen für die Aufnahme eines Kindes in sitzender Position dargestellt, wobei Basiselement 2, Gestell 4 und Räder 5 denen aus Fig. 1 entsprechen. Im Unterschied zu Fig. 1 ist jedoch das Formelement 3 gemäß dieser Ausführungsform aus Metall, vorzugsweise aus Leichtmetall, gebildet. Zudem können im Cockpitbereich farbig ausgestaltete Drehknöpfe, Hebel oder dergleichen vorgesehen sein, die vom Kind während des Transportes im Kinderwagen spielerisch betätigt werden können. Desweiteren verfügt der Kinderwagen über ein verschwenkbares Faltdach, das dem Cabriodach dieses Sportwagentypens nachempfunden ist und das mittels eines elektrischen Antriebes per Knopfdruck in seiner Lage verschwenkbar ist. In dem hier dargezeigten Ausführungsbeispiel gemäß Fig. 2 ist das Faltdach eingeklappt.

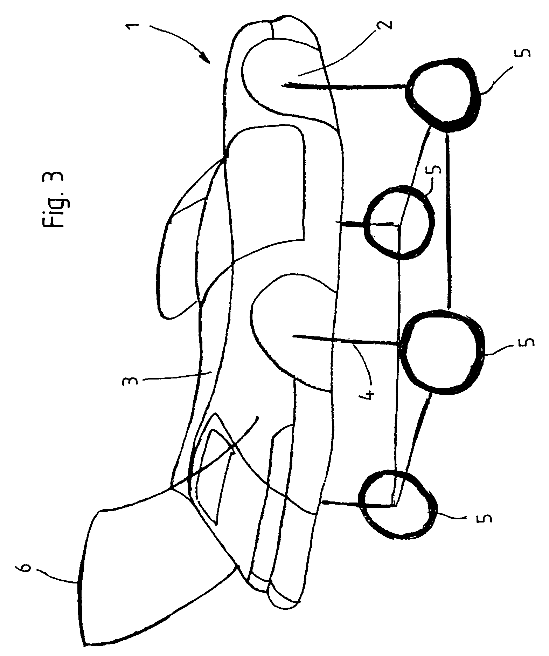

Fig. 3 zeigt schließlich einen Kinderwagen zur Aufnahme eines Kindes in liegender Position. Formelement 3 und Basiselement 2 bilden zusammen den Korpus 1, der gemäß dieses Ausführungsbeispieles einstückig hergestellt ist und in seiner Formgestaltung der Karosserie eines Sportwagens nachempfunden ist.

Der Korpus 1 wird von einem Gestell 4, das als Fahrgestell ausgebildet und mit Rädern versehen ist, getragen, wobei das Gestell 4 mittels entsprechender Befestigungsmittel lösbar am Korpus 1 angeordnet ist. Somit lassen sich Gestell 4 und Korpus 1 voneinander trennen, was insbesondere von Vorteil ist, wenn der Kinderwagen beispielsweise im Kofferraum eines Autos transportiert werden soll und er zu diesem Zwecke im Sinne einer besseren Handhabbarkeit in zwei weniger sperrige Teile unterteilbar ist. Zudem wird durch die lösbare Verbindung von Korpus 1 und Gestell 4 die Möglichkeit gegeben, den Korpus 1 separat, beispielsweise als Transporttasche zu verwenden. Zu diesem Zweck sind vorzugsweise an den Längsseiten des Korpus 1 Tragegurte anordbar. Beispielsweise ist die Verwendung des Korpus 1 als Transporttasche dann vorteilhaft, wenn das Gestell im Treppenhaus eines Wohnhauses verbleiben soll, der Korpus 1 jedoch mit in die Wohnung genommen wird. Gemäß einer besonderen Ausgestaltungsform der Erfindung ist das Gestell 4 als Hebebühne ausgestaltet, womit der optische Eindruck eines sich gerade in Reparatur auf einer Hebebühne befindlichen Fahrzeuges geschaffen wird. Dabei sind die Felgen bzw. die Reifen des Kinderwagens dem Fahrzeug entsprechend nachgebildet.

Die im rückwärtigen Bereich des Korpus 1 angeordnete Handhabe 6 ist lösbar und um einen Winkel verdrehbar an diesem befestigt. Bezogen auf die Körpergröße des Benutzers ist somit eine optimierte Einstellung möglich. Zudem ist das Fahrgestell 4 höhenverstellbar ausgebildet, womit gleichfalls eine optimierte Einstellung auf die Körpergröße des Benutzers möglich ist.

Der in Fig. 3 dargestellte Kinderwagen dient der Aufnahme von Kindern in liegender Position. Durch einen einfachen Umbau kann dieser jedoch ebenfalls zu einem Kinderwagen umgestaltet werden, der gemäß den Ausführungsbeispielen nach den Fig. 1 und Fig. 2 Kinder in sitzender Position aufnimmt. Hierzu ist das Gestell 4 lediglich durch jeweils zwei Räder direkt aufnehmende Achsen zu ersetzen. Mit Vorteil wird somit ein Kinderwagen zur Verfügung gestellt, der nicht nur dem Transport von Kindern in liegender Position dient, sondern der auch die Fortbewegung von Kindern in sitzender Position erlaubt. Ein und derselbe Kinderwagen kann somit je nach Alter des Kindes sowohl als reiner Transportwagen aber auch als Spiel- und Sportgerät für das Kind dienen.

### Bezugszeichenliste

- 1: Korpus
- 2: Basiselement
- 3: Formelement
- 4: Gestell
- 5: Rad
- 6: Handhabe

## Patentansprüche

1. Kinderwagen mit einem wenigstens ein Kind in liegender oder sitzender Position aufnehmenden Korpus (1) sowie einem den Korpus tragenden Gestell (4),
**dadurch gekennzeichnet,**
daß der Korpus (1) aus einem Basiselement (2) und einem Formelement (3) gebildet ist, wobei unterschiedliche Formelemente (3) nach dem Baukastenprinzip auswechselbar mit einem Basiselement (2) kombinierbar sind und zumindest das Formelement (3) eine einem Fahrzeug nachempfundene Formgestaltung aufweist.

2. Kinderwagen nach Anspruch 1, dadurch gekennzeichnet, daß das Formelement (3) im Sinne einer Verkleidung am Basiselement (2) und/oder am Gestell (4) lösbar angeordnet ist.

3. Kinderwagen nach Anspruch 1 oder 2, dadurch gekennzeichnet, daß das Gestell (4) in seiner Formgestaltung dem Chassis eines Kraftfahrzeuges nachempfunden ist.

4. Kinderwagen nach einem der Ansprüche 1 bis 3, dadurch gekennzeichnet, daß das Gestell (4) und das Basiselement (2) lösbar miteinander verbindbar sind.

5. Kinderwagen nach einem der vorhergehenden Ansprüche, dadurch gekennzeichnet, daß das Gestellt (4) in der Höhe verstellbar ist.

6. Kinderwagen nach einem der vorhergehenden Ansprüche, dadurch gekennzeichnet, daß eine Handhabe (6) vorgesehen ist, die lösbar und um einen Winkel verdrehbar am Korpus (1) oder am Gestell (4) angeordnet ist.

7. Kinderwagen nach einem der vorhergehenden Ansprüche, dadurch gekennzeichnet, daß Anbauteile des Kinderwagens in ihrer Formgestaltung denen eines Kraftfahrzeuges nachempfunden sind.

8. Kinderwagen nach einem der vorhergehenden Ansprüche, dadurch gekennzeichnet, daß die Räder (5) Kraftfahrzeugrädern nachempfunden sind.

9. Kinderwagen nach einem der vorhergehenden Ansprüche, dadurch gekennzeichnet, daß das Formelement (3) aus Kunststoff besteht.

10. Kinderwagen nach einem der vorhergehenden Ansprüche, dadurch gekennzeichnet, daß das Formelement (3) aus Metall, vorzugsweise Leichtmetall, besteht.

11. Kinderwagen nach einem der vorhergehenden Ansprüche, dadurch gekennzeichnet, daß eine fuß- oder handbetätigbare Bremsanlage bzw. Wegfahrsperre vorgesehen ist.

12. Kinderwagen nach einem der vorhergehenden Ansprüche, dadurch gekennzeichnet, daß zur Kenntlichmachung des Kinderwagens eine am Korpus (1) oder am Gestell (4) angeordnete Beleuchtungseinrichtung vorgesehen ist.

13. Kinderwagen nach einem der vorhergehenden Ansprüche, dadurch gekennzeichnet, daß zur Abgabe von insbesondere Warnsignalen eine Signaleinrichtung am Kinderwagen angeordnet ist.
